# EUROPÄISCHE PATENTSCHRIFT

(11) **EP 0 933 275 B1**
(45) Veröffentlichungstag und Bekanntmachung des Hinweises auf die Patenterteilung: **10.05.2006**
(21) Anmeldenummer: 98118043.3
(22) Anmeldetag: 23.09.1998
(51) Int. Cl.: B60T 8/88

(54) **Verfahren und Vorrichtung zur Überprüfung einer in einem Fahrzeug enthaltenen Bremsanlage**
Method and device for checking a brake system incorporated in a vehicle
Procédé et dispositif de contrôle d' un système de freinage incorporé dans un véhicule

(30) Priorität: 29.01.1998 DE 19803365; 25.06.1998 DE 19827943
(43) Veröffentlichungstag der Anmeldung: 04.08.1999
(73) Patentinhaber: ROBERT BOSCH GMBH, 70442 Stuttgart (DE)
(72) Erfinder: Braun, Thomas, 71711 Murr (DE)

(56) Entgegenhaltungen:
- EP-A- 0 733 531
- WO-A-91/15386
- DE-A- 3 418 044
- DE-A- 3 922 947
- DE-A- 4 106 336
- DE-A- 19 638 196

## Beschreibung

### Stand der Technik

Die Erfindung betrifft ein Verfahren und eine Vorrichtung zur Überprüfung einer in einem Fahrzeug enthaltenen Bremsanlage.

Als eine aus dem Stand der Technik bekannte Bremsanlage sei auf die in der WO 97/21 570 beschriebene Bremsanlage verwiesen. Diese Bremsanlage weist einen Hauptbremszylinder auf, an den über Radbremsdruckmodulationsventilanordnungen mit einem Bremsdruckaufbauventil und einem Bremsdruckabsenkventil Radbremszylinder angeschlossen sind. Mit einer Rückförderpumpe läßt sich aus den Radbremszylindern durch die Bremsdruckabsenkventile ausgelassenes Bremsfluid zurück in Richtung des Hauptbremszylinders oder zum erneuten Druckaufbau wieder in Richtung der Radbremszylinder fördern. Eine Vorladepumpe dient dazu, bei nicht betätigtem Hauptbremszylinder Bremsfluid aus einem Vorratsbehälter der Rückförderpumpe zuzuführen. Sowohl mit der Rückförderpumpe als auch mit der Vorladepumpe läßt sich bei entsprechender Schaltung von Ventilen der bekannten Fahrzeugbremsanlage Bremsdruck in der Fahrzeugbremsanlage aufbauen. Zur Schlupfregelung weist die bekannte Fahrzeugbremsanlage des weiteren Raddrehsensoren sowie ein elektronisches Steuergerät auf, das Signale der Raddrehsensoren auswertet und die Pumpen und Ventile der Fahrzeugbremsanlage steuert. Die bekannte Fahrzeugbremsanlage weist eine Bremsschlupf-, Antriebsschlupf- und Fahrdynamikregeleinrichtung auf.

Verfahren und Vorrichtungen zur Überprüfung einer in einem Fahrzeug enthaltenen Bremsanlage sind aus dem Stand der Technik in vielerlei Modifikationen bekannt. Beispielsweise zeigt die DE 38 28 931 A1 ein Verfahren zur Überwachung der Funktion einer Bremsanlage. Hierzu werden der Weg, die Geschwindigkeit und die Beschleunigung des Kolbens des Hauptzylinders durch einen Sensor erfaßt. Die so ermittelten Bremsbetätigungsdaten werden an den elektronischen Regler weitergeleitet. Durch einen Radsensor werden die Raddaten, d.h. die Radumfangsgeschwindigkeit erfaßt und an den Regler weitergeleitet. Der elektronische Regler prüft, ob die Raddaten ein, einer ordnungsgemäßen Bremsung entsprechendes, Korrelat zu den Bremsbetätigungsdaten darstellen. Ist dies nicht der Fall, so wird durch Schließen eines Schalters eine Pumpe betrieben, die Druckmittel in den Radbremszylinder fördert, der vorher infolge der Störung nicht mit Druckmittel versorgt werden konnte. Bei diesem Verfahren ist allerdings aufgrund seiner Konzeption eine Überwachung der Bremsanlage nur dann möglich, wenn die Bremsanlage vom Fahrer betätigt wird. Eine vom Fahrer unabhängige, d.h. zu beliebigen Zeitpunkten durchgeführte Überwachung der Bremsanlage ist nicht möglich.

Die DE 41 18 597 A1 zeigt eine Vorrichtung zur Ermittlung und Beseitigung einer Speicherfluidleckage. Das hydraulische System, in welchem diese Vorrichtung eingegliedert ist, umfaßt einen Speicher, einen durch das vom Speicher zugeführte Fluid betätigten Stellantrieb und ein Steuerventil mit einer Offen- bzw. Schließstellung für eine Fluidverbindung bzw. absperrung zwischen dem Speicher sowie dem Stellantrieb. Ferner enthält die Vorrichtung einen Leckagefühler, der ein Ausgangssignal erzeugt, welches für eine Leckströmung des Fluids vom Speicher durch das in der Schließstellung befindliche Steuerventil kennzeichnend ist. Dieses Ausgangssignal wird einer Einrichtung zugeführt, durch die bei Vorliegen des Ausgangssignals das Ventilelement des Steuerventils hin- und herbewegt wird. Durch das Hin- und Herbewegen des Ventilelements wird dieses auf dem Ventilsitz in korrekten Sitz gebracht, wodurch ein kompletter Abschluß des Steuerventils gewährleistet wird. Die Fluidleckagen können aufgrund von Fremdkörpern, die zwischen Ventilsitz und Ventilelement vorhanden sind, zustande kommen. Die vorstehend beschriebene Vorrichtung hat den Nachteil, daß zur Erkennung der Leckage, neben der Auswertung des Pumpenverhaltens, zusätzlich ein Druckschalter erforderlich ist.

Die DE 39 22 947 A1 beschreibt eine hydraulische Bremsanlage, die Bremsdruckmodulatoren enthält, mit denen das Blokkieren von Fahrzeugrädern infolge zu hoher Bremsdrücke vermieden wird. Die Bremsdruckmodulatoren umfassen Bremsleitungssperrventile und Zylinder mit Kolben, bei deren Verschiebung zur Bremsdruckabsenkung Druckmittel aus den Radbremsen entweicht. Die Verschiebungen der Kolben werden über Ventilanordnungen gesteuert, die an eine Servodruckquelle angeschlossen sind. Der Ausfall der Servodruckquelle kann schon bei kleiner Undichtheit einer Ventilanordnung zu einem wenigstens teilweisen Bremskraftverlust während eines Bremsvorganges führen. Zur Erkennung und Anzeige von gegebenenfalls vorhandener Undichtheit ist ein auf die Ventilanordnungen wirkendes Steuergerät so eingerichtet, daß es die Ventilanordnungen in verschiedene Schaltstellungen steuert und dabei über einen Drucksensor beobachtet, ob logisch zugeordnete Drücke sich unzulässig verändern. Auch dieser Stand der Technik weist den Nachteil auf, daß zur Durchführung der Überprüfung Drucksensoren erforderlich sind. Zwar ist es möglich, die Überprüfung der Bremsanlage unabhängig vom Fahrer durchzuführen, jedoch wird das hierzu erforderliche Bremsmedium ausgehend von einem Speicher bereitgestellt. Dadurch ist ein gleichbleibender Druck des Bremsmediums nicht unbedingt sichergestellt, was unter Umständen zu einer Beeinträchtigung der durchgeführten Überprüfung führen kann.

Vor dem Hintergrund des vorliegenden Standes der Technik besteht die Aufgabe darin, bestehende Verfahren bzw. Vorrichtungen zur Überprüfung bzw. Überwachung einer Bremsanlage dahingehend zu verbessern, daß zum einen ausgehend von der Sensorik (zumindest Raddrehzahlsensoren), die in einer mit einer Schlupfregeleinrichtung ausgestatteten Bremsanlage vorhanden ist, keine zusätzliche Sensorik, wie z.B. Drucksensoren, erforderlich ist. Zum anderen soll die Überwachung der Bremsanlage unabhängig davon durchgeführt werden können, ob eine Betätigung der Bremsanlage durch den Fahrer vorliegt. Gleichzeitig sollen hierbei gleichbleibende Bedingungen, insbesondere gleichbleibende Druckverhältnisse, vorliegen.

Die vorstehend aufgeführte Aufgabe wird durch die Merkmale des Anspruchs 1 bzw. durch die des Anspruchs 10 gelöst.

### Vorteile der Erfindung

Die der Erfindung zugrundeliegende Bremsanlage enthält wenigstens einen Bremskreis. Dieser Bremskreis enthält ausgangsseitig erste Ventilanordnungen, die jeweils aus einem ersten Ventil, insbesondere einem Einlaßventil, und einem zweiten Ventil, insbesondere einem Auslaßventil, bestehen. An die ersten Ventilanordnungen sind dem Bremskreis zugeordnete Radbremszylinder angeschlossen. Ferner enthält die Bremsanlage einen Vorratsbehälter zur Aufnahme von Bremsmedium und eingangsseitig ein erstes Ventil, insbesondere ein Umschaltventil, und ein zweites Ventil, insbesondere ein Ansaugventil, wobei der Vorratsbehälter mit diesen beiden Ventilen in Verbindung steht. Außerdem weist die Bremsanlage wenigstens eine Pumpe auf, mit der Bremsmedium zu wenigstens zwei Radbremszylindern gefördert werden kann. Die der Erfindung zugrundeliegende Bremsanlage weist eine erste Pumpe, insbesondere eine Vorladepumpe, die saugseitig mit dem Vorratsbehälter direkt in Verbindung steht, und mit der Bremsmedium in Richtung der Radbremszylinder förderbar ist, und je Bremskreis eine zweite Pumpe, insbesondere eine Rückförderpumpe, die mit den ersten Ventilanordnungen im Bremskreis in Verbindung steht, und mit der Bremsmedium in die Radbremszylinder hinein oder aus diesen heraus förderbar ist, auf.

Bei dem erfindungsgemäßen Verfahren werden in vorbestimmten Fahrzeugzuständen die wenigstens eine Pumpe betätigt und die ersten Ventilanordnungen mit vorbestimmten Ansteuersignalen angesteuert. Während der Betätigung der Pumpe und der ersten Ventilanordnungen wird mittels Raddrehzahlsensoren für wenigstens ein Rad des Fahrzeuges eine Radverhaltensgröße, bei welcher es sich um den Radschlupf und/oder die Raddrehzahl und/oder die Geschwindigkeit des Rades handelt, ermittelt, die das Raddrehverhalten des entsprechenden Rades beschreibt. In Abhängigkeit dieser Radverhaltensgröße wird die Bremsanlage auf einen ersten und/oder zweiten Fehler hin überprüft.

Als Radverhaltensgröße wird der Radschlupf und/oder die Raddrehzahl und/oder die Geschwindigkeit des Rades verwendet. Die Verwendung der vorstehend aufgeführten Größen hat den Vorteil, daß diese unter Verwendung der Raddrehzahlsensoren, die bei einer mit einem Schlupfregelsystem ausgestatteten Bremsanlage ohnehin vorhanden sind, ermittelt werden können. Folglich sind keine zusätzlichen Sensoren, wie z.B. Drucksensoren, erforderlich. Darüber hinaus ist zur Durchführung des erfindungsgemäßen Verfahrens eine Modifikation der Bremsanlage, was die Hydraulikkomponenten angeht, nicht erforderlich, d.h. es sind keine zusätzlichen Pumpen oder Ventile oder andere hydraulische Hilfsmittel erforderlich. Mit anderen Worten, es kann auf die im Fahrzeug ohnehin enthaltene Aktuatorik bzw. Sensorik zurückgegriffen werden.

Ein weiterer Vorteil des erfindungsgemäßen Verfahrens besteht darin, daß mit ihm ein erster und/oder ein zweiter Fehler der Bremsanlage feststellbar ist, d.h. es sind gezielt verschiedene Einzelfehler oder eine Kombination verschiedener Einzelfehler ermittelbar.

Da die Überprüfung der Bremsanlage in Abhängigkeit einer Radverhaltensgröße durchgeführt wird, läuft das erfindungsgemäße Verfahren deshalb vorteilhafterweise in vorbestimmten Fahrzeugzuständen ab. Dadurch wird sichergestellt, daß die Radverhaltensgröße, und mit ihr auch die Überwachung bzw. Überprüfung der Bremsanlage nicht durch das Fahrzeugverhalten verfälscht wird. Beispielsweise könnte es bei einer Kurvenfahrt oder bei einem Beschleunigungs- oder Bremsvorgang zu einer Verfälschung der Radverhaltensgröße kommen. Um dies zu vermeiden, werden die vorbestimmten Fahrzeugzustände vorteilhafterweise wie folgt definiert: Ein vorbestimmter Fahrzeugzustand liegt dann vor, wenn annähernd eine Geradeausfahrt des Fahrzeuges vorliegt, und eine die Fahrzeuggeschwindigkeit beschreibende Größe annähernd konstant ist, d.h. das Fahrzeug weder gebremst noch beschleunigt wird und der Hauptbremszylinder nicht betätigt ist. Eine Betätigung des Hauptbremszylinder kann beispielsweise mit Hilfe eines Bremslichtschalters festgestellt werden. Solche Fahrzeugzustände können entweder bewußt herbeigeführt werden oder sich während des Betriebs des Fahrzeuges, d.h. im normalen Fahrzeugbetrieb ergeben. Für bewußt herbeigeführte Fahrzeugzustände sei beispielhaft die Bandendekontrolle beim Fahrzeughersteller, bei der das Fahrzeug entweder von einem Fahrer nach definierten Vorgaben bewegt wird oder sich das Fahrzeug auf einem Rollenprüfstand befindet, oder eine Testfahrt nach einem Werkstattaufenthalt genannt.

Bei der Überprüfung der Bremsanlage auf den ersten Fehler hin wird überprüft, ob die in der Bremsanlage enthaltenen Einlaßventile fehlerhaft sind oder nicht. Mit Hilfe dieser Überprüfung soll festgestellt werden, ob wenigstens eines der Einlaßventile defekt offen ist, d.h. ob durch das Einlaßventil Bremsmedium fließt, obwohl es sich aufgrund seiner Ansteuerung in der Sperrstellung befindet. Als Radverhaltensgröße wird bei dieser Überprüfung eine Radschlupfgröße, die den am entsprechenden Rad vorliegenden Radschlupf beschreibt, verwendet.

Bei dieser Überprüfung werden vorteilhafterweise alle Einlaßventile durch die vorbestimmten Ansteuersignale in eine Sperrstellung gebracht. Während dieser Ansteuerung der Einlaßventile wird durch die Betätigung der Pumpe Bremsmedium gegen die Einlaßventile gefördert. Sind die Einlaßventile in einwandfreiem Zustand, d.h. schließen sie in Sperrstellung den jeweils zugehörigen Radbremszylinder vollkommen ab, so kann der Bremsdruck in dem jeweils zugehörigen Radbremszylinder nicht ansteigen. Schließen die Einlaßventile dagegen nicht vollkommen ab, so wird der Bremsdruck in dem jeweils zugehörigen Radbremszylinder ansteigen, was zu einer Veränderung der zugehörigen Radverhaltensgröße führt. Um den Anstieg des Bremsdruckes aufgrund eines fehlerhaften Einlaßventils besser feststellen zu können, werden vorteilhafterweise auch alle zweiten Ventile der ersten Ventilanordnungen, d.h. alle Auslaßventile, durch die vorbestimmten Ansteuersignale in eine Sperrstellung gebracht. Dadurch wird erreicht, daß das Bremsmedium, welches in den Radbremszylinder eingeflossen ist, nicht sofort wieder aus dem Radbremszylinder ausfließt.

Vorteilhafterweise wird die Überprüfung auf den ersten Fehler hin wie folgt durchgeführt: Während der entsprechenden Ansteuerung der ersten und zweiten Ventile der ersten Ventilanordnungen wird für jedes Rad eine Radverhaltensgröße ermittelt. Diese Radverhaltensgrößen werden mit einem Schwellenwert verglichen. Sind alle Radverhaltensgrößen kleiner als der Schwellenwert, was gleichbedeutend damit ist, daß der Bremsdruck in den Radbremszylindern nicht angestiegen ist und die Einlaßventile somit dicht sind, so liegt der erste Fehler nicht vor. Für den Fall, daß wenigstens eine der Radverhaltensgrößen größer als der Schwellenwert ist, was ein Zeichen dafür ist, daß der erste Fehler vorzuliegen scheint, wird die Ansteuerung der Pumpe sowie der ersten und zweiten Ventile abgebrochen. Nach einer vorgegebenen Zeitdauer werden die Pumpe, die ersten und zweiten Ventile nochmals durch die vorbestimmten Ansteuersignale angesteuert. Der erste Fehler liegt dann vor, wenn bei dieser nochmaligen Ansteuerung erneut wenigstens eine der Radverhaltensgrößen größer als der Schwellenwert ist. Zur Überprüfung auf den ersten Fehler hin werden die Pumpe, die ersten und zweiten Ventile deshalb zeitlich versetzt zweimal angesteuert, um diese Überprüfung sicherer, d.h. robuster zu machen. Denn erst, wenn zeitlich versetzt, der Schwellenwert zweimal überschritten wird, soll der erste Fehler vorliegen. An dieser Stelle sei allerdings erwähnt, daß auf die zweite Ansteuerung der vorstehend aufgeführten Komponenten durchaus verzichtet werden kann, und die Überprüfung auf den ersten Fehler hin lediglich mit Hilfe einer Ansteuerung durchgeführt werden kann. Bei dieser Vorgehensweise ist die Fehlerüberprüfung allerdings nicht mehr ganz so robust.

Vorteilhafterweise wird die Überprüfung auf den ersten Fehler hin von Zeit zu Zeit während des Betriebes des Fahrzeuges selbsttätig durchgeführt, z.B. einmal je Zündungszyklus oder einmal je Betriebsstunde, da solch ein Fehler in den Einlaßventilen durch Ablagerung eines Schmutzpartikels durchaus während des Betriebs eines Fahrzeuges auftreten kann.

Bei der Überprüfung der Bremsanlage auf den zweiten Fehler hin wird überprüft, ob ein Fehler beim hydraulischen Anschluß der Radbremszylinder an die Bremsanlage, genauer gesagt an das Hydroaggregat 12, also insbesondere vertauscht angeschlossene Radbremszylinder, oder ob ein Fehler beim elektrischen Anschluß der Raddrehzahlsensoren an das Steuergerät, also vertauscht oder nicht angeschlossene Raddrehzahlsensoren, vorliegen. Die Überprüfung wird vorzugsweise als Testzyklus durchgeführt. Beispielsweise wird die Überprüfung nach Fertigstellung des Fahrzeugs beim Hersteller am Bandende oder nach einem Werkstattaufenthalt durchgeführt, da in beiden Fällen ein vorstehend beschriebener Fehler auftreten kann. Als Radverhaltensgröße wird bei dieser Überprüfung eine Radgeschwindigkeitsgröße, die die Raddrehzahl oder die Geschwindigkeit des entsprechenden Rades beschreibt, verwendet.

Da bei dieser Überprüfung festgestellt werden soll, ob die Radbremszylinder richtig an das Hydroaggregat bzw. die Bremsanlage angeschlossen sind, oder ob die Raddrehzahlsensoren richtig an das Steuergerät angeschlossen sind, werden hierzu durch die vorbestimmten Ansteuersignale vorteilhafterweise für eine erste Ventilanordnung das erste Ventil in eine Durchlaßstellung und das zugehörige zweite Ventil in eine Sperrstellung und für die restlichen ersten Ventilanordnungen die ersten Ventile in eine Sperrstellung und die zugehörigen zweiten Ventile in eine Sperrstellung oder Durchlaßstellung gebracht. Während der vorstehend beschriebenen Ansteuerung der ersten und zweiten Ventile wird durch Betätigung der Pumpe Bremsmedium in Richtung der Radbremszylinder gefördert. Durch die vorstehend beschriebene Ansteuerung wird ein Radbremszylinder mit dem durch die Pumpe aufgebauten Bremsdruck beaufschlagt, die übrigen Radbremszylinder werden dagegen nicht mit dem Bremsdruck beaufschlagt. Vorzugsweise werden die Auslaßventile dieser übrigen Radbremszylinder geöffnet, um sicherzustellen, daß diese Radbremszylinder nicht mit Bremsdruck beaufschlagt sind. Die Beaufschlagung des einen Radbremszylinders erfolgt mit einem Bremsdruck, der ausreicht, eine merkliche Veränderung der Radverhaltensgröße des entsprechenden Fahrzeugrades zu bewirken, d.h. die Raddrehzahl oder die Geschwindigkeit dieses Fahrzeugrades fällt signifikant ab. Bei den übrigen Radbremszylindern kann kein Bremsdruckaufbau stattfinden und somit auch keine Veränderung der Radverhaltensgröße auftreten.

Vorteilhafterweise wird die Überprüfung auf den zweiten Fehler hin wie folgt durchgeführt: Während der entsprechenden Ansteuerung der ersten und zweiten Ventile wird für jedes Rad eine Radverhaltensgröße ermittelt. Die Radverhaltensgröße des Rades, dessen erstes Ventil in Durchlaßstellung gebracht ist, wird mit der Radverhaltensgröße wenigstens eines Rades, dessen erstes Ventil in Sperrstellung gebracht ist, verglichen. D.h. es wird die Radverhaltensgröße des gebremsten Rades mit einem ungebremsten Rad verglichen. Der zweite Fehler liegt dann vor, wenn sich die Radverhaltensgröße des gebremsten Rades nicht in einem vorgebbaren Maße von der Radverhaltensgröße des wenigstens einen Rades unterscheidet. Dieser Sachverhalt läßt darauf schließen, daß das Rad, dessen Einlaßventil sich eigentlich in Durchlaßstellung befinden sollte, nicht mit Bremsmedium beaufschlagt wird und somit offensichtlich nicht richtig an das Hydroaggregat angeschlossen ist. Alternativ oder ergänzend kann die Überprüfung auf den zweiten Fehler hin wie folgt durchgeführt werden: Für das Rad, dessen erstes Ventil in Durchlaßstellung gebracht ist, wird die Änderung der Radverhaltensgröße je Zeiteinheit ermittelt und mit einem vorgegebenen Schwellenwert verglichen. Der zweite Fehler liegt dann vor, wenn diese Änderung kleiner als der vorgegebene Schwellenwert ist.

An dieser Stelle sei bemerkt, daß die Auswertung der Änderung der Radverhaltensgröße gegenüber dem Vergleich der Radverhaltensgröße des gebremsten Rades mit der eines ungebremsten Rades den Vorteil hat, daß diese Auswertung unabhängig von den anderen Rädern durchgeführt werden kann, wodurch eventuelle Fehlerquellen ausgeschlossen werden können.

Vorteilhafterweise wird die Überprüfung auf den zweiten Fehler hin dergestalt durchgeführt, daß nacheinander jeweils für ein anderes Rad des Fahrzeuges das zugehörige erste Ventil entsprechend in Durchlaßstellung gebracht wird. Mit anderen Worten, die Überprüfung auf den zweiten Fehler hin wird so durchgeführt, daß durch zyklische Ansteuerung der ersten Ventilanordnungen ein jedes Rad des Fahrzeuges einmal in einem Prüfzyklus mit Bremsdruck beaufschlagt werden kann. Dabei ist jeweils nach der zyklischen Ansteuerung genügend Zeit vorgesehen, so daß sich der Bremsdruck des jeweils mit Druck beaufschlagten Rades wieder entspannen kann.

Bei einem vertauschten hydraulischen Anschluß zweier oder mehrerer Radbremszylinder oder einem vertauschten elektrischen Anschluß zweier oder mehrerer Raddrehzahlsensoren wird mit dem erfindungsgemäßen Verfahren die Bremsung eines Fahrzeugrades ermittelt, das eigentlich nicht gebremst werden sollte, womit folglich ein Anschlußfehler feststellbar ist.

Vorteilhafterweise wird während der Betätigung der Pumpe und der ersten Ventilanordnungen das erste eingangsseitige Ventil in eine Sperrstellung und das zweite eingangsseitige Ventil in eine Durchlaßstellung gebracht wird. Dadurch wird gewährleistet, daß Bremsmedium zu den Radbremszylindern gefördert wird.

Das erfindungsgemäße Verfahren läßt sich an Einkreisbremsanlagen ebenso durchführen wie an Mehrkreisbremsanlagen. Es ist gleichermaßen für hydraulische wie für pneumatische Bremsanlagen geeignet. Auch für elektrohydraulische oder elektropneumatische Bremsanlagen, bei denen der Bremsdruck nicht mit einem Hauptbremszylinder, sondern mit einer Pumpe oder mit einem Kompressor aufgebaut und abhängig von einem mit einem Bremspedal verursachten Bremskraftsignal gesteuert wird, läßt sich das erfindungsgemäße Verfahren durchführen. Auch bei Mehrkreisbremsanlagen mit einer Vorladepumpe für jeden Bremskreis läßt sich das erfindungsgemäße Verfahren durchführen.

Vorteilhafterweise kann auch eine Kombination der Überprüfung auf den ersten Fehler hin mit der auf den zweiten Fehler hin realisiert werden. So kann beispielsweise die Überprüfung auf den ersten Fehler hin im Rahmen der Überprüfung auf den zweiten Fehler hin eingesetzt werden. Dadurch kann ausgeschlossen werden, daß auf einen falschen Anschluß eines Radbremszylinders an das Hydroaggregat oder auf einen falschen Anschluß eines Raddrehzahlsensors an das Steuergerät erkannt wird, obwohl eigentlich ein Einlaßventil defekt ist. Vorteilhafterweise können die vorstehend beschriebenen Überprüfungen der Bremsanlage auch in andere Überprüfungsabläufe eingebunden werden.

An dieser Stelle sei bemerkt, daß bei der Überprüfung auf den ersten Fehler hin als Radverhaltensgröße durchaus die Radverhaltensgröße verwendet werden kann, die bei der Überprüfung auf den zweiten Fehler hin verwendet wird. Entsprechendes gilt auch in der umgekehrten Weise.

Weitere Vorteile sowie vorteilhafte Ausgestaltungen können den Unteransprüchen, der Zeichnung und der Beschreibung des Ausführungsbeispiels entnommen werden.

### Zeichnung

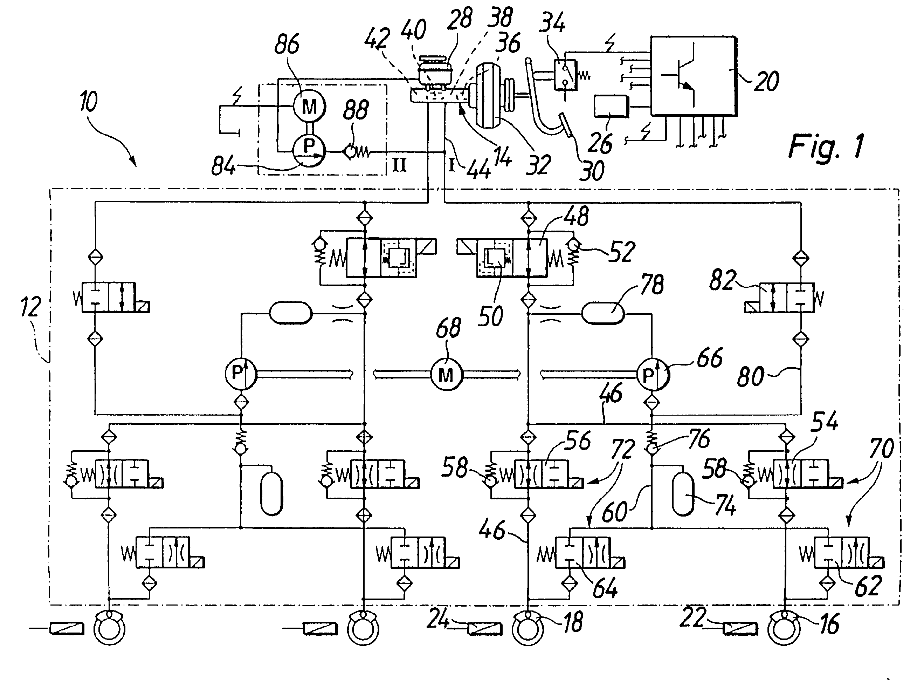

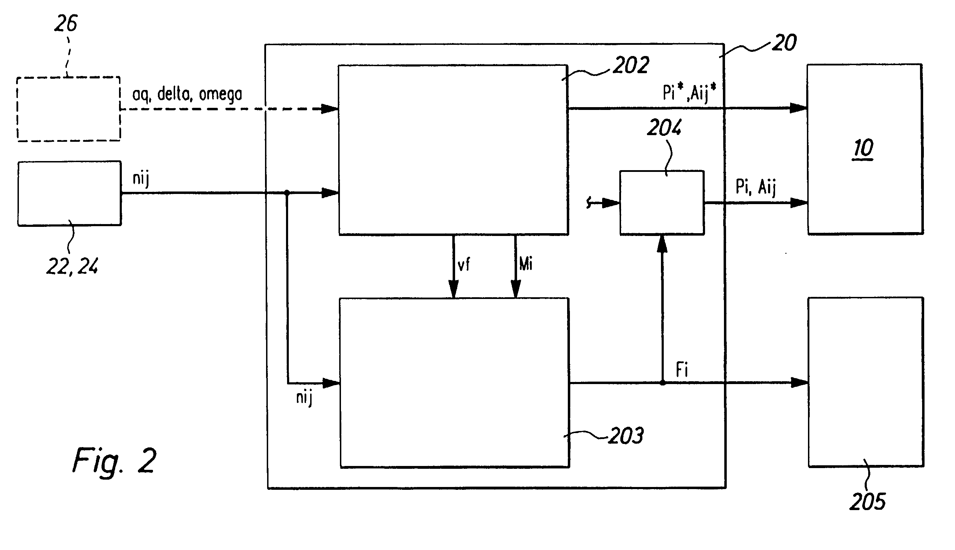

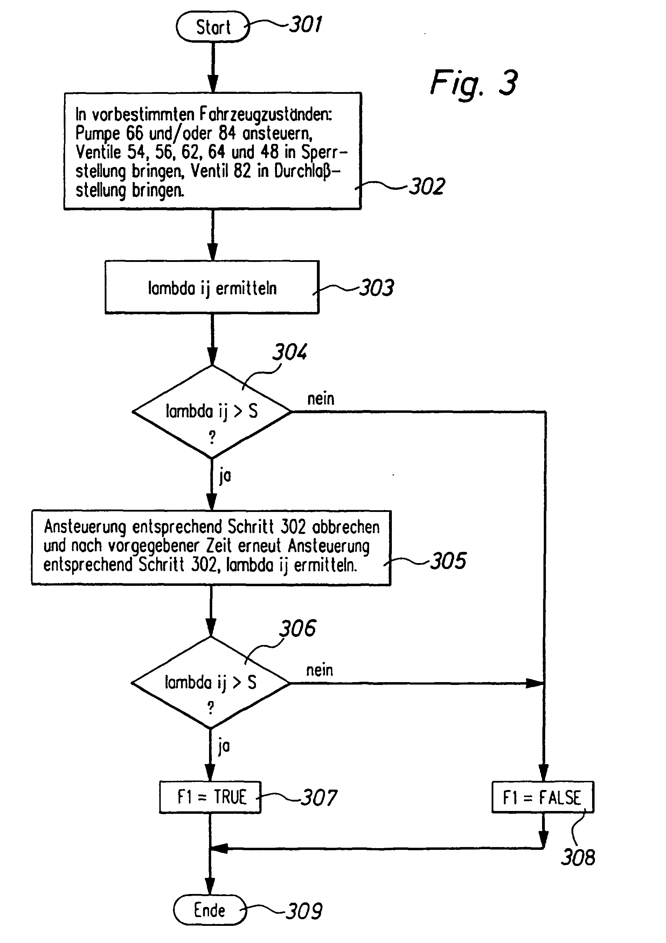

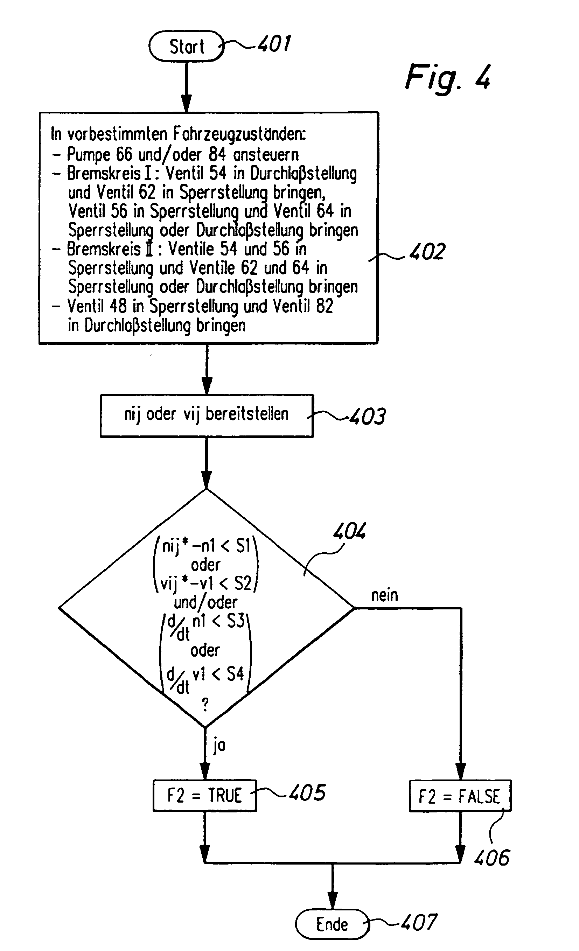

Die Zeichnung besteht aus den Figuren 1 bis 4. Figur 1 zeigt in einer Übersichtsdarstellung die Fahrzeugbremsanlage, die mit Hilfe des erfindungsgemäßen Verfahrens überwacht bzw. überprüft wird. Dabei ist in Figur 1 der hydraulische Schaltplan der Bremsanlage sowie das zur Bremsanlage gehörende Steuergerät dargestellt. Figur 2 zeigt in einer Übersichtsanordnung die erfindungsgemäße Vorrichtung zur Durchführung des erfindungsgemäßen Verfahrens. In den Figuren 3 bzw. 4 sind mit Hilfe von Ablaufdiagrammen Ausführungen zur Durchführung des erfindungsgemäßen Verfahrens dargestellt. Dabei zeigt Figur 3 ein Ablaufdiagramm gemäß dem die Bremsanlage auf einen ersten Fehler hin überprüft wird, Figur 4 zeigt eines, mit dem die Bremsanlage auf einen zweiten Fehler hin überprüft wird.

### Ausführungsbeispiel

Die in Figur 1 dargestellte erfindungsgemäße, hydraulische Bremsanlage 10 ist als Zweikreisbremsanlage ausgebildet und weist eine Schlupfregeleinrichtung auf. Hydraulische Bauelemente der Schlupfregeleinrichtung wie Magnetventile, Pumpen, Hydrospeicher und Dämpferkammern sind in einem Hydroaggregat 12 untergebracht. Das Hydroaggregat 12 ist an einen Zweikreis-Hauptbremszylinder 14 angeschlossen, Radbremszylinder 16, 18 sind an das Hydroaggregat 12 angeschlossen. Zur Schlupfregelung weist die Fahrzeugbremsanlage 10 ein Steuergerät 20 auf, das Signale von Raddrehzahlsensoren 22, 24 erhält, die mit den Radbremszylindern 16, 18 bremsbaren Fahrzeugrädern zugeordnet sind. Die Schlupfregeleinrichtung, die in an sich bekannter Weise funktioniert und die hier nicht näher erläutert werden soll, ermöglicht eine Bremsschlupfregelung (ABS) und/oder eine Antriebsschlupfregelung (ASR) und/oder eine Fahrdynamikregelung (FDR). Hinsichtlich der Funktion der Fahrzeugbremsanlage 10 bei herkömmlichem Bremsen ohne Blockiergefahr, der Blockierschutz-, der Antriebsschlupf- und der Fahrdynamikregelung wird auf die eingangs genannte WO 97/21 570 oder die DE 196 39 560 oder die in der Automobiltechnischen Zeitschrift (ATZ) 96, 1994, Heft 11, auf den Seiten 674 bis 689 erschienene Veröffentlichung "FDR
- Die Fahrdynamikregelung von Bosch" verwiesen. Zur Fahrdynamikregelung weist die Fahrzeugbremsanlage 10 weitere Sensoren auf, die mit dem elektronischen Steuergerät 20 verbunden und die durch das Symbol 26 dargestellt sind. Diese Sensoren 26 erfassen beispielsweise einen Lenkwinkel, eine Giergeschwindigkeit und Querbeschleunigung des Fahrzeugs sowie einen Hauptbremszylinderdruck. Wird mit der Fahrzeugbremsanlage lediglich eine Bremsschlupf- und/oder Antriebsschlupfregelung realisiert, so sind hierfür als Sensoren lediglich die Raddrehzahlsensoren erforderlich.

Der Hauptbremszylinder 14 weist einen Vorratsbehälter 28 für Bremsflüssigkeit auf, er wird mittels eines Bremspedals 30 über einen Bremskraftverstärker 32 betätigt. Zur Feststellung der Betätigung des Hauptbremszylinders 14 weist die Fahrzeugbremsanlage 10 einen Bremslichtschalter 34 auf, der mit dem elektronischen Steuergerät 20 verbunden ist.

Der Hauptbremszylinder 14 ist in an sich bekannter Weise als Zweikreishauptbremszylinder ausgebildet. Er weist einen ersten, sog. Stangenkolben 36 auf, der unmittelbar mit dem Bremspedal 30 über den Bremskraftverstärker 32 verschoben wird. Der Stangenkolben 36 verursacht bei seiner Verschiebung in den Hauptbremszylinder 14 hinein einen Bremsdruckaufbau in einer ersten Druckkammer 38 des Hauptbremszylinders 14. Des weiteren weist der Hauptbremszylinder 14 einen zweiten, sog. Schwimmkolben 40 auf, der vom Druck in der ersten Druckkammer 38 beaufschlagt und dadurch im Hauptbremszylinder 14 verschoben wird und bei seiner Verschiebung in den Hauptbremszylinder 14 hinein einen Bremsdruck in einer zweiten Druckkammer 42 des Hauptbremszylinders 14 bewirkt. Die beiden Kolben 36, 40 sind in der Zeichnung mit Strichlinien angedeutet dargestellt. Wird infolge eines Defekts bei der Verschiebung des Stangenkolbens 36 in den Hauptbremszylinder 14 hinein kein Bremsdruck in der ersten Druckkammer 38 aufgebaut, verschiebt der Stangenkolben 36 nach einem Leerweg in an sich bekannter Weise den Schwimmkolben 40 mechanisch, so daß in der zweiten Druckkammer 42 Bremsdruck durch Niedertreten des Bremspedals 30 aufgebaut wird.

An den Hauptbremszylinder 14 sind zwei voneinander unabhängige Bremskreise I, II angeschlossen, die im dargestellten Ausführungsbeispiel je zwei Radbremszylinder 16, 18 aufweisen. Die Fahrzeugbremsanlage 10 wird nachfolgend anhand des in der Zeichnung rechts dargestellten Bremskreises I erläutert. Der links dargestellte Bremskreislauf II ist übereinstimmend aufgebaut und funktioniert in gleicher Weise.

Der Bremskreis I ist über eine Hauptbremsleitung 44 an eine Druckkammer 38 des Hauptbremszylinders 14 angeschlossen. Die Hauptbremsleitung 44 verzweigt sich in zwei Radbremsleitungen 46, die zu den Radbremszylindern 16, 18 führen. In der Hauptbremsleitung 44 ist ein in seiner Grundstellung (Durchlaßstellung) offenes Umschaltventil 48 angeordnet, in das ein in Richtung des Hauptbremszylinders 14 öffnendes Differenzdruckventil als Druckbegrenzungsventil 50 integriert ist, das in einer geschlossenen Schaltstellung (Sperrstellung) des Umschaltventils 48 wirksam ist. Das Umschaltventil 48 stellt eingangsseitig ein erstes Ventil dar. Dem Umschaltventil 48 ist ein in Richtung vom Hauptbremszylinder 14 zu den Radbremszylindern 16, 18 durchströmbares Rückschlagventil 52 parallel geschaltet.

In den Radbremsleitungen 46 sind in ihrer Grundstellung (Durchlaßstellung) offene erste Ventile 54, 56, sog. Einlaßventile, angeordnet, denen in Richtung von den Radbremszylindern 16, 18 zum Hauptbremszylinder 14 durchströmbare Rückschlagventile 58 parallel geschaltet sind.

Von den Radbremszylindern 16, 18 führt eine gemeinsame Rückführleitung 60 zur Hauptbremsleitung 44. Die Rückführleitung 60 ist zwischen dem Umschaltventil 48 und der Verzweigung der Hauptbremsleitung 44 in die Radbremsleitungen 46, also zwischen dem Umschaltventil 48 und den Einlaßventilen 54, 56 an die Hauptbremsleitung 44 angeschlossen. Jeder Radbremszylinder 16, 18 ist über ein zweites Ventil 62, 64, ein sog. Auslaßventil, an die Rückführleitung 60 angeschlossen. In der Rückführleitung 60 ist eine zweite Pumpe 66, eine sog. Rückförderpumpe angeordnet, mit der durch die Auslaßventile 62, 64 aus den Radbremszylindern 16, 18 ausströmende Bremsflüssigkeit in die Hauptbremsleitung 44, also in Richtung des Hauptbremszylinders 14 bzw. zurück in Richtung der Radbremszylinder 16, 18 förderbar ist. Der Antrieb der Rückförderpumpe 66 erfolgt mittels eines Elektromotors 68, der die beiden Rückförderpumpen 66 der beiden Bremskreise I, II gemeinsam antreibt. Die Einlaßventile 54, 56 und die Auslaßventile 62, 64 bilden jedem Radbremszylinder 16, 18 zugeordnete erste Ventilanordnungen 70, 72.

Auf einer Saugseite der Rückförderpumpe 66 ist ein Hydrospeicher 74 an die Rückführleitung 60 angeschlossen, in der Rückführleitung 60 ist zwischen dem Hydrospeicher 74 und der Saugseite der Rückförderpumpe 66 ein in Richtung der Rückförderpumpe 66 durchströmbares Rückschlagventil 76 angeordnet. Zwischen einer Druckseite der Rückförderpumpe 66 und der Hauptbremsleitung 44 ist eine Dämpferkammer 78 in der Rückführleitung 60 angeordnet. Über die Hauptbremsleitung 44 ist unmittelbar, also unter Umgehung des Umschaltventils 48, eine Ansaugleitung 80 an den Hauptbremszylinder 14 angeschlossen, in der ein in seiner Grundstellung (Sperrstellung) geschlossenes Ansaugventil 82 angeordnet ist. Das Ansaugventil stellt eingangsseitig ein zweites Ventil dar. Die Ansaugleitung 80 führt zur Saugseite der Rückförderpumpe 66. Die Ansaugleitung 80 dient dazu, der Rückförderpumpe 66 bei nicht betätigtem Hauptbremszylinder 14 Bremsflüssigkeit unter Druck zuzuführen, um einen schnellen Bremsdruckaufbau auch bei kalter, zähflüssiger Bremsflüssigkeit zu erreichen. Der Druckaufbau erfolgt mittels einer ersten Pumpe, einer sog. Vorladepumpe 84, die mit einem eigenen Elektromotor 86 antreibbar ist, die an den Bremsflüssigkeits-Vorratsbehälter 28 des Hauptbremszylinders 14 angeschlossen ist und die Bremsflüssigkeit über ein Rückschlagventil 88 in die an die erste Druckkammer 38 des Hauptbremszylinders 14 angeschlossene Hauptbremsleitung 44 des einen Bremskreises I fördert. Die Vorladepumpe 84 beaufschlagt die erste Druckkammer 38 mit Druck. Die erste Druckkammer 38 kommuniziert bei nicht betätigtem Hauptbremszylinder 14 über eine in der Zeichnung nicht dargestellte Drosselstelle mit dem Vorratsbehälter 28. Die Drosselstelle wird bei herkömmlichen Hauptbremszylindern 14 durch ein Zentralventil im Stangenkolben 36 oder eine nicht dargestellte Schnüffelbohrung im Anschluß der ersten Druckkammer 38 an den Vorratsbehälter 28 gebildet. Die Vorladepumpe 84 fördert also bei nicht betätigtem Hauptbremszylinder 14 Bremsflüssigkeit im Kreis vom Vorratsbehälter 28 in die erste Druckkammer 38 und über die Drosselstelle zurück in den Vorratsbehälter 28. Aufgrund der Drosselstelle findet ein Druckaufbau in der ersten Druckkammer 38 und somit in der Hauptbremsleitung 44 statt. Infolge der Beaufschlagung der ersten Druckkammer 38 mit Druck wird über den Schwimmkolben 40 des Hauptbremszylinders 14 auch die zweite Druckkammer 42 mit Druck beaufschlagt, so daß auch im zweiten Bremskreis II ein Druckaufbau erfolgt. Infolge des Druckaufbaus mit der Vorladepumpe 84 strömt bei geschlossenem Umschaltventil 48 und geöffnetem (Durchlaßstellung) Ansaugventil 82 ein Teil der von der Vorladepumpe 84 geförderten Bremsflüssigkeit zur Saugseite der Rückförderpumpe 66, um den schnellen Bremsdruckaufbau mittels der Rückförderpumpe 66 zu bewirken.

Das Umschaltventil 48 und das Ansaugventil 82 stellen eine in der Bremsanlage eingangsseitig angeordnete zweite Ventilanordnung dar. Das Umschaltventil 48, die Einlaßventile 54, 56, die Auslaßventile 62, 64 und das Ansaugventil 82 der Fahrzeugbremsanlage 10 sind als 2/2-Wege-Magnetventile ausgebildet. Sie werden, ebenso wie die Elektromotoren 68, 86 der Rückförderpumpe 66 und der Vorladepumpe 84 vom Steuergerät 20 gesteuert.

Nachfolgend wird auf Figur 2 eingegangen, die den Aufbau des Steuergeräts 20 zeigt. Das Steuergerät enthält Blöcke 202, 203 und 204, auf die nachfolgend eingegangen wird. Die mit den Raddrehzahlsensoren 22, 24 erzeugten Raddrehzahlgrößen nij, die die Raddrehzahlen der entsprechenden Räder darstellen, werden sowohl dem Block 202 als auch dem Block 203 zugeführt. An dieser Stelle sei bemerkt, daß in Figur 2 nicht alle im Fahrzeug enthaltenen Raddrehzahlsensoren dargestellt sind. Mit Blick auf die Schreibweise nij sei festgehalten: Der Index i gibt an, ob sich das Rad an der Hinterachse (h) oder an der Vorderachse (v) befindet. Der Index j zeigt die Zuordnung zur rechten (r) bzw. zur linken (1) Fahrzeugseite an. Diese Kennzeichnung durch die beiden Indizes i bzw. j ist für sämtliche Größen bzw. Komponenten, bei denen sie Verwendung findet entsprechend.

Im Block 202 wird ermittelt, ob sich das Fahrzeug in einem vorbestimmten Fahrzeugzustand befindet. Für den Fall, daß sich das Fahrzeug in solch einem Zustand befindet, werden vom Block 202 Ansteuersignale Aij* und Pi* ausgegeben, die der Bremsanlage 10 zur Ansteuerung der einzelnen Komponenten zugeführt werden. Bei den Ansteuersignalen Pi* handelt es sich um die, mit denen die in der Bremsanlage enthaltenen Pumpen, d.h. die Vorladepumpe und die Rückförderpumpen angesteuert werden. Bei den Ansteuersignalen Aij* handelt es sich um die vorbestimmten Ansteuersignale, mit denen die Ventile der ersten Ventilanordnungen sowie die Umschaltventile als auch das Ansaugventile angesteuert werden. Je nach dem, ob eine Überprüfung der Bremsanlage auf den ersten oder auf den zweiten Fehler hin durchgeführt wird, sind die vorbestimmten Ansteuersignale Aij* zumindest für die Ventile der ersten Ventilanordnungen verschieden.

Zur Ermittlung, ob sich das Fahrzeug in einem vorbestimmten Fahrzeugzustand befindet, wird im Block 202 in bekannter Weise in Abhängigkeit der Raddrehzahlgrößen nij eine die Fahrzeuggeschwindigkeit beschreibende Größe vf ermittelt. Mit Hilfe der Größe vf wird ermittelt, ob die Fahrzeuggeschwindigkeit annähernd konstant ist. Hierzu wird beispielsweise die zeitliche Änderung der Größe vf ermittelt und mit einem entsprechenden Schwellenwert verglichen. Gleichzeitig wird im Block 202 ermittelt, ob das Fahrzeug annähernd geradeaus fährt. Zur Durchführung dieser Geradeausfahrtermittlung gibt es in Abhängigkeit der mit dem Block 204, der den Reglerkern darstellt, durchgeführten Schlupfregelung verschiedene Möglichkeiten. Beispielsweise wird der Unterschied der Raddrehzahlgrößen achsgleicher Räder, insbesondere der Vorderräder, ermittelt. Zur Feststellung, ob das Fahrzeug geradeaus fährt, wird der Unterschied mit einem entsprechenden Schwellenwert verglichen. Allerdings ist in diesem Fall eine Zusatzlogik zur Überwachung der Raddrehzahlsensoren erforderlich, um mögliche Fehler, die von den Raddrehzahlsensoren ausgehen können, zu erkennen bzw. auszuschließen. Diese Geradeausfahrtermittlung bietet sich vor allem dann an, wenn im Reglerkern eine Bremschlupf- und/oder Antriebsschlupfregelung durchgeführt wird. Alternativ, und vor allem dann, wenn mit dem Reglerkern eine Fahrdynamikregelung durchgeführt wird, und somit die entsprechende Sensorik 26 zur Verfügung steht, kann zur Geradeausfahrtermittlung ein Lenkwinkelsignal delta und/oder ein Querbeschleunigungssignal aq und/oder ein Giergeschwindigkeitssignal omega ausgewertet werden. Dies ist in Figur 2 durch die strichlinierte Darstellung bzw. Anbindung des Blockes 26 an den Block 202 angedeutet. Ein vorbestimmter Fahrzeugzustand liegt dann vor, wenn die Fahrzeuggeschwindigkeit annähernd konstant ist, und das Fahrzeug annähernd geradeaus fährt. Auch kann gefordert sein, daß der Hauptbremszylinder nicht betätigt ist.

Im Block 203 findet die eigentliche Überprüfung der Bremsanlage auf den ersten und/oder zweiten Fehler hin statt. Zu diesem Zweck werden dem Block 203 die Raddrehzahlgrößen nij, sowie ausgehend vom Block 202 neben der Größe vf auch eine Größe Mi zugeführt. Durch die Größe Mi wird dem Block 203 mitgeteilt, ob die Bremsanlage auf den ersten oder auf den zweiten Fehler hin überprüft werden soll. Auf die konkrete Vorgehensweise bei der Überprüfung wird im Zusammenhang mit den Figuren 3 bzw. 4 ausführlich eingegangen. Mit Hilfe der Größe Fi gibt der Block 203 aus, ob der erste oder der zweite Fehler vorliegt. Die Größe Fi wird sowohl einem Block 204 als auch einem Block 205 zugeführt.

Bei dem Block 204 handelt es sich um den Reglerkern, mit dem die eigentliche Schlupfregelung, die im Steuergerät implementiert ist, durchgeführt wird. In diesem Zusammenhang sei nochmals auf die WO 97/21 570 oder die DE 196 39 560 oder die bereits vorstehend erwähnte Veröffentlichung "FDR - Die Fahrdynamikregelung von Bosch" verwiesen. Bei der durchgeführten Schlupfregelung soll es sich beispielsweise um eine Bremsschlupf- und/oder Antriebsschlupfregelung oder um eine Fahrdynamikregelung handeln. Zur Durchführung der Schlupfregelung werden dem Reglerkern 204 verschiedene Größen zugeführt, was durch den abgesetzten Zuführungspfeil angedeutet ist. Zur Durchführung der Schlupfregelung ist eine entsprechende Ansteuerung der in der Bremsanlage 10 enthaltenen Ventile und Pumpen erforderlich. Zu diesem Zweck werden der Bremsanlage 10 ausgehend vom Reglerkern 204 die Signale Aij bzw. Pi zugeführt. In Abhängigkeit der dem Reglerkern zugeführten Signale Fi kann bei Vorliegen eines Fehlers im Reglerkern ein Notlauf eingeleitet werden oder aber die Schlupfregelung ausgesetzt werden.

Beim Block 205 handelt es sich um eine Anzeigeeinheit, mit der ausgehend von Signalen Fi angezeigt wird, ob der erste und/oder der zweite Fehler vorliegt. Die Anzeigeeinheit kann fest im Fahrzeug montiert sein. Alternativ kann es sich auch um eine externe Anzeigeeinheit handeln, die beispielsweise bei einer Überprüfung der Bremsanlage am Bandende oder während eines Werkstattaufenhaltes mit dem Steuergerät in geeigneter Weise verbunden ist.

Nachfolgend wird auf Figur 3 eingegangen. Figur 3 zeigt in Form eines Ablaufdiagrammes das erfindungsgemäße Verfahren zur Überprüfung der Bremsanlage auf den ersten Fehler hin. Diese Überprüfung beginnt mit einem Schritt 301, an den sich ein Schritt 302 anschließt. Im Schritt 302 wird die Pumpe 66 und/oder die Pumpe 84 angesteuert. Gleichzeitig werden die Ventile 54, 56, 62, 64 und 48 in eine Sperrstellung und das Ventil 82 in eine Durchlaßstellung gebracht. Im Normalfall wird diese Ansteuerung sowohl für den ersten als auch für den zweiten Bremskreis gleichzeitig durchgeführt. Es ist aber auch denkbar, daß diese Ansteuerung für lediglich einen Bremskreis durchgeführt wird. Bei der vorstehend beschriebenen Ansteuerung wird vorausgesetzt, daß sich das Fahrzeug in einem vorbestimmten Zustand befindet. Ferner wird vorausgesetzt, daß diese Ansteuerung solange bestehen bleibt, bis sie entweder aktiv abgebrochen, z.B. wegen Fahrerbremswunsch, oder die Überprüfung durch Schritt 309 beendet wird.

Anschließend an den Schritt 302 wird ein Schritt 303 ausgeführt. In diesem Schritt werden für die Räder des Fahrzeuges in bekannter Weise, ausgehend von den Raddrehzahlgrößen nij und der Größe vf, Radschlupfgrößen lambdaij ermittelt. Im Anschluß an den Schritt 303 wird ein Schritt 304 ausgeführt, in welchem die Radschlupfgrößen lambdaij mit einem Schwellenwert S verglichen werden. Wird im Schritt 304 festgestellt, daß eine der Radschlupfgrößen lambdaij größer als der Schwellenwert S ist, was gleichbedeutend damit ist, daß ein Einlaßventil defekt offen ist, so wird anschließend an den Schritt 304 ein Schritt 305 ausgeführt. Wird dagegen im Schritt 304 festgestellt, daß keine Radschlupfgröße größer als der Schwellenwert ist, was gleichbedeutend damit ist, daß alle Einlaßventile einwandfrei sind, so wird anschließend an den Schritt 304 ein Schritt 308 ausgeführt. Im Schritt 308 wird deshalb der Größe F1 der Wert FALSE zugewiesen. Anschließend an den Schritt 308 folgt ein Schritt 309, mit dem die Überprüfung auf den ersten Fehler hin beendet wird.

Im Schritt 305 wird zunächst die im Schritt 302 eingeleitete Ansteuerung abgebrochen. Nach ein vorgegebenen Zeitdauer werden erneut die Pumpe 66 und/oder die Pumpe 84, sowie die Ventile 48, 54, 56, 62, 64 und 82 entsprechend dem Schritt 302 angesteuert. Außerdem werden erneut die Radschlupfgrößen lambdaij ermittelt. Anschließend an den Schritt 305 wird ein Schritt 306 ausgeführt. In diesem Schritt findet erneut ein Vergleich der Radschlupfgrößen lambdaij mit einem entsprechenden Schwellenwert statt, wie er bereits im Schritt 304 stattgefunden hat. Wird im Schritt 306 festgestellt, daß eine der Radschlupfgrößen lambdaij größer als der Schwellenwert S ist, so wird anschließend an den Schritt 304 ein Schritt 307 ausgeführt. In diesem Schritt wird, da wenigstens eines der Einlaßventile defekt ist, der Größe F1 der Wert TRUE zugewiesen. Anschließend an den Schritt 307 wird der Schritt 309 ausgeführt. Wird dagegen im Schritt 306 festgestellt, daß keine Radschlupfgröße größer als der Schwellenwert ist, so wird anschließend an den Schritt 306 der Schritt 308 ausgeführt.

Wie bereits im Kapitel "Vorteile der Erfindung" erwähnt, werden in den Schritten 302 bzw. 305 zur Erhöhung der Robustheit bzw. Sicherheit die entsprechenden Komponenten zweimal zeitversetzt angesteuert. Zur Überprüfung auf den ersten Fehler hin wäre prinzipiell auch eine einzige Ansteuerung ausreichend, d.h. auf die zweite Ansteuerung könnte verzichtet werden. Hierzu wären in dem mit Hilfe von Figur 3 dargestellten Verfahren entsprechende Änderungen erforderlich.

Im folgenden wird Figur 4 beschrieben. In Figur 4 ist in Form eines Ablaufdiagrammes das erfindungsgemäße Verfahren zur Überprüfung der Bremsanlage auf den zweiten Fehler hin dargestellt. An dieser Stelle sei folgendes festgehalten: Die Darstellung in Figur 4 beschränkt sich darauf, daß für ein Rad, nämlich für das Rad des Bremskreises I, dem das Einlaßventil 54 zugeordnet ist, das zugehörige Einlaßventil geöffnet ist. Die entsprechende Ansteuerung für die restlichen Räder des Fahrzeuges ist in Figur 4 nicht dargestellt. Dies soll keine Einschränkung des erfindungsgemäßen Verfahrens darstellen. Wie bereits vorstehend erwähnt, wird bei der Überprüfung auf den zweiten Fehler hin zyklisch verfahren, d.h. für jeweils ein Rad wird nacheinander das Einlaßventil in seine Durchlaßstellung gebracht, während die Einlaßventile der restlichen Räder in ihrer Sperrstellung sind. Folglich wird das in Figur 4 dargestellte Verfahren insgesamt viermal, für jedes Rad in entsprechender Weise einmal, durchgeführt.

Die Überprüfung beginnt mit einem Schritt 401, an den sich ein Schritt 402 anschließt. Bei der Ausführung des Schrittes 402 wird vorausgesetzt, daß sich das Fahrzeug in einem vorbestimmten Fahrzeugzustand befindet. Im Schritt 402 wird die Pumpe 66 und/oder die Pumpe 84 angesteuert. Im Bremskreis I wird das Ventil 54 in Durchlaßstellung und das Ventil 62 in Sperrstellung gebracht. Gleichzeitig wird das Ventil 56 in Sperrstellung und das Ventil 64 in Sperr- oder in Durchlaßstellung gebracht. Im Bremskreis II werden die Ventile 54 und 56 in Sperrstellung und die Ventile 62 und 64 in Sperr- oder in Durchlaßstellung gebracht. In beiden Bremskreisen werden das Ventil 48 in Sperrstellung und das Ventil 82 in Durchlaßstellung gebracht. Anschließend an den Schritt 402 wird ein Schritt 403 ausgeführt. In diesem Schritt werden die Radgeschwindigkeitsgrößen nij oder vij bereitgestellt. Die Größen nij entsprechen den Raddrehzahlen, die mit den Raddrehzahlsensoren erfaßt werden. Die Größen vij entsprechen den Geschwindigkeiten der Räder, insbesondere den Umfangsgeschwindigkeiten der Räder, und werden in bekannter Weise aus den Raddrehzahlen ermittelt. Anschließend an den Schritt 403 wird ein Schritt 404 ausgeführt.

Im Schritt 404 wird überprüft, ob sich ein signifikanter Drehzahl- bzw. Geschwindigkeitsunterschied des gebremsten Fahrzeugrades zu den ungebremsten Fahrzeugrädern ergibt und/oder ob die Drehzahl- bzw. Geschwindigkeitsänderung je Zeiteinheit des gebremsten Fahrzeugrades signifikant hoch ist. Im ersten Fall wird die Abweichung der Raddrehzahl n1 des gebremsten Rades von der Raddrehzahl nij* eines ungebremsten Rades ermittelt und mit einem entsprechenden Schwellenwert S1 verglichen oder es wird die Abweichung der Geschwindigkeit v1 des gebremsten Rades von der Geschwindigkeit vij* eines ungebremsten Rades ermittelt und mit einem entsprechenden Schwellenwert S2 verglichen. In diesem Zusammenhang soll die Schreibweise nij* bzw. vij* andeuten, daß es sich um die Radverhaltensgrößen der ungebremsten Räder handelt. Im zweiten Fall wird die zeitliche Änderung d/dt(n1) der Raddrehzahl n1 des gebremsten Rades ermittelt und mit einem entsprechenden Schwellenwert S3 verglichen oder es wird die zeitliche Änderung d/dt(v1) der Geschwindigkeit v1 des gebremsten Rades ermittelt und mit einem entsprechenden Schwellenwert S4 verglichen. Alternativ kann auch untersucht werden, ob die zeitliche Änderung der Radverhaltensgröße des gebremsten Rades signifikant größer ist als die eines ungebremsten Rades. Ist die im Schritt 404 stattfindende Abfrage erfüllt, was gleichbedeutend damit ist, daß ein Radbremszylinder fehlerhaft an das Hydroaggregat oder ein Raddrehzahlsensor fehlerhaft an das Steuergerät angeschlossen ist, so wird anschließend ein Schritt 405 ausgeführt, in welchem deshalb der Größe F2 der Wert TRUE zugewiesen wird. Ist dagegen die im Schritt 404 stattfindende Abfrage nicht erfüllt, so wird anschließend an den Schritt 404 ein Schritt 406 ausgeführt, in welchem der Größe F2 der Wert FALSE zugewiesen wird. Sowohl im Anschluß an den Schritt 405 als auch im Anschluß an den Schritt 406 wird ein Schritt 407 ausgeführt, mit dem die Überprüfung beendet wird.

Aus Sicherheits- bzw. Robustheitsgründen wird das erfindungsgemäße Verfahren automatisch abgebrochen und muß neu gestartet werden, wenn während des Prüfzyklus das Bremspedal 30 betätigt wird.

Abschließend sei bemerkt, daß die in der Beschreibung gewählte Form des Ausführungsbeispiels sowie die in den Figuren gewählte Darstellung keine einschränkende Wirkung auf die erfindungswesentliche Idee darstellen soll.

## Patentansprüche

1. Verfahren zur Überprüfung einer in einem Fahrzeug enthaltenen Bremsanlage (10), wobei die Bremsanlage wenigstens einen Bremskreis (I, II) enthält, wobei der Bremskreis ausgangsseitig erste Ventilanordnungen (70, 72) enthält, wobei an die ersten Ventilanordnungen dem Bremskreis zugeordnete Radbremszylinder (16, 18) angeschlossen sind, und wobei die Bremsanlage wenigstens eine Pumpe (66, 84) aufweist, mit der Bremsmedium zu wenigstens zwei Radbremszylindern gefördert werden kann,
**dadurch gekennzeichnet,**
**daß** in vorbestimmten Fahrzeugzuständen die wenigstens eine Pumpe betätigt wird und die ersten Ventilanordnungen mit vorbestimmten Ansteuersignalen (Aij*) angesteuert werden, daß während der Betätigung der Pumpe und der ersten Ventilanordnungen mittels Raddrehzahlsensoren für wenigstens ein Rad des Fahrzeuges eine Radverhaltensgröße (nij, vij, lambdaij), bei welcher es sich um den Radschlupf und/oder die Raddrehzahl und/oder die Geschwindigkeit des Rades handelt, ermittelt wird, die das Raddrehverhalten des entsprechenden Rades beschreibt, und
**daß** in Abhängigkeit dieser Radverhaltensgröße die Bremsanlage auf einen ersten und/oder zweiten Fehler (Fi) hin überprüft wird.

2. Verfahren nach Anspruch 1, **dadurch gekennzeichnet,**
**daß** bei der Überprüfung auf den ersten Fehler (F1) hin als Radverhaltensgröße eine Radschlupfgröße (lambdaij), die den am entsprechenden Rad vorliegenden Radschlupf beschreibt, verwendet wird, und/oder
**daß** bei der Überprüfung auf den zweiten Fehler (F2) hin als Radverhaltensgröße eine Radgeschwindigkeitsgröße (nij, vij), die die Raddrehzahl (nij) oder die Geschwindigkeit (vij) des entsprechenden Rades beschreibt, verwendet wird.

3. Verfahren nach Anspruch 1, **dadurch gekennzeichnet,**
**daß** bei der Überprüfung auf den ersten und/oder zweiten Fehler hin die vorbestimmten Fahrzeugzustände dann vorliegen, wenn wenigstens annähernd eine Geradeausfahrt des Fahrzeuges vorliegt und eine die Fahrzeuggeschwindigkeit beschreibende Größe (vf) annähernd konstant ist.

4. Verfahren nach Anspruch 1, **dadurch gekennzeichnet,**
**daß** die ersten Ventilanordnungen jeweils aus einem ersten Ventil (54, 56), insbesondere einem Einlaßventil, und einem zweiten Ventil (62, 64), insbesondere einem Auslaßventil, bestehen, wobei die ersten und/oder zweiten Ventile mit den vorbestimmten Ansteuersignalen (Aij*) angesteuert werden, und
**daß** bei der Überprüfung auf den ersten Fehler hin durch die vorbestimmten Ansteuersignale sowohl alle ersten als auch alle zweiten Ventile der ersten Ventilanordnungen in eine Sperrstellung gebracht werden.

5. Verfahren nach Anspruch 1, **dadurch gekennzeichnet,**
**daß** die ersten Ventilanordnungen jeweils aus einem ersten Ventil (54, 56), insbesondere einem Einlaßventil, und einem zweiten Ventil (62, 64), insbesondere einem Auslaßventil, bestehen, wobei die ersten und/oder zweiten Ventile mit den vorbestimmten Ansteuersignalen (Aij*) angesteuert werden, und
**daß** bei der Überprüfung auf den zweiten Fehler hin durch die vorbestimmten Ansteuersignale für eine erste Ventilanordnung das erste Ventil in eine Durchlaßstellung und das zugehörige zweite Ventil in eine Sperrstellung und für die restlichen ersten Ventilanordnungen die ersten Ventile in eine Sperrstellung und die zugehörigen zweiten Ventile in eine Sperrstellung oder Durchlaßstellung gebracht werden,
insbesondere wird die Überprüfung auf den zweiten Fehler hin dergestalt durchgeführt, daß nacheinander jeweils für ein anderes Rad des Fahrzeuges das zugehörige erste Ventil entsprechend in Durchlaßstellung gebracht wird.

6. Verfahren nach Anspruch 4, **dadurch gekennzeichnet,**
**daß** während der entsprechenden Ansteuerung der ersten und zweiten Ventile für jedes Rad eine Radverhaltensgröße ermittelt wird, und
**daß** die Radverhaltensgrößen (lambdaij) mit einem Schwellenwert (S) verglichen werden, und
**daß** für den Fall, daß wenigstens eine der Radverhaltensgrößen größer als der Schwellenwert ist, die Ansteuerung der Pumpe, der ersten und zweiten Ventile abgebrochen wird, und
**daß** nach einer vorgegebenen Zeitdauer die Pumpe, die ersten und zweiten Ventile nochmals durch die vorbestimmten Ansteuersignale angesteuert werden, und
**daß** der erste Fehler dann vorliegt, wenn bei dieser nochmaligen Ansteuerung erneut wenigstens eine der Radverhaltensgrößen größer als der Schwellenwert ist.

7. Verfahren nach Anspruch 5, **dadurch gekennzeichnet,**
**daß** während der entsprechenden Ansteuerung der ersten und zweiten Ventile für jedes Rad eine Radverhaltensgröße ermittelt wird, und
**daß** die Radverhaltensgröße (n1, v1) des Rades, dessen erstes Ventil in Durchlaßstellung gebracht ist, mit der Radverhaltensgröße (nij*, vij*) wenigstens eines Rades, dessen erstes Ventil in Sperrstellung gebracht ist, verglichen wird, und
**daß** der zweite Fehler dann vorliegt, wenn sich die Radverhaltensgröße des Rades, dessen erstes Ventil in Durchlaßstellung gebracht ist, nicht in einem vorgebbaren Maße (S1, S2) von der Radverhaltensgröße des wenigstens einen Rades unterscheidet, und/oder
**daß** während der entsprechenden Ansteuerung der ersten und zweiten Ventile für jedes Rad eine Radverhaltensgröße ermittelt wird, und
**daß** die Änderung der Radverhaltensgröße (d/dt(nl), d/dt(vl)) des Rades, dessen erstes Ventil in Durchlaßstellung gebracht ist, je Zeiteinheit ermittelt wird, und mit einem vorgegebenen Schwellenwert (S3, S4) verglichen wird, und
**daß** der zweite Fehler dann vorliegt, wenn diese Änderung kleiner als der vorgegebene Schwellenwert ist.

8. Verfahren nach Anspruch 1, **dadurch gekennzeichnet,**
**daß** die Bremsanlage einen Vorratsbehälter (28) zur Aufnahme von Bremsmedium und eingangsseitig ein erstes Ventil (48), insbesondere ein Umschaltventil, und ein zweites Ventil (82), insbesondere ein Ansaugventil, aufweist, wobei der Vorratsbehälter sowohl mit diesem ersten als auch mit diesem zweiten Ventil in Verbindung steht, und
**daß** während der Betätigung der Pumpe und der ersten Ventilanordnung das erste eingangsseitige Ventil in eine Sperrstellung (50) und das zweite eingangsseitige Ventil in eine Durchlaßstellung gebracht wird.

9. Verfahren nach Anspruch 1, **dadurch gekennzeichnet,**
**daß** als Pumpe eine erste Pumpe (84), insbesondere eine Vorladepumpe, verwendet wird, die saugseitig mit einem Vorratsbehälter direkt in Verbindung steht, und mit der Bremsmedium in Richtung der Radbremszylinder förderbar ist, und/oder
**daß** als Pumpe eine zweite Pumpe (66), insbesondere eine Rückförderpumpe, verwendet wird, die mit den ersten Ventilanordnungen in Verbindung steht, und mit der Bremsmedium in die Radbremszylinder hinein oder aus diesen heraus förderbar ist.

10. Vorrichtung zur Überprüfung einer in einem Fahrzeug enthaltenen Bremsanlage (10), wobei die Bremsanlage wenigstens einen Bremskreis (I, II) enthält, wobei der Bremskreis ausgangsseitig erste Ventilanordnungen (70, 72) enthält, wobei an die ersten Ventilanordnungen dem Bremskreis zugeordnete Radbremszylinder (16, 18) angeschlossen sind, und wobei die Bremsanlage wenigstens eine Pumpe (66, 84) aufweist, mit der Bremsmedium zu wenigstens zwei Radbremszylindern gefördert werden kann,
**dadurch gekennzeichnet,**
**daß** Mittel (202) vorhanden sind, mit denen in vorbestimmten Fahrzeugzuständen die wenigstens eine Pumpe betätigt wird und die ersten Ventilanordnungen mit vorbestimmten Ansteuersignalen angesteuert werden,
**daß** Mittel (203) vorhanden sind, mit denen während der Betätigung der Pumpe und der ersten Ventilanordnungen mittels Raddrehzahlsensoren für wenigstens ein Rad des Fahrzeuges eine Radverhaltensgröße, bei welcher es sich um den Radschlupf und/oder die Raddrehzahl und/oder die Geschwindigkeit des Rades handelt, ermittelt wird, die das Raddrehverhalten des entsprechenden Rades beschreibt, und mit denen in Abhängigkeit der ermittelten Radverhaltensgröße die Bremsanlage auf einen ersten und/oder zweiten Fehler hin überprüft wird.

## Claims

1. Method for checking a brake system (10) contained in a vehicle, the brake system containing at least one brake circuit (I, II), the brake circuit containing first valve arrangements (70, 72) on the output side, wheel-brake cylinders (16, 18) assigned to the brake circuit being connected to the first valve arrangements, and the brake system having at least one pump (66, 84), by means of which brake medium can be conveyed to at least two wheel-brake cylinders, **characterized in that**, in predetermined vehicle states, the at least one pump is actuated and the first valve arrangements are activated by means of predetermined activation signals (Aij*), **in that**, during the actuation of the pump and the first valve arrangements, for at least one wheel of the vehicle, a wheel-behaviour variable (nij, vij, lambdaij), which is the wheel slip and/or the wheel rotational speed and/or the velocity of the wheel and which describes the wheel-rotation behaviour of the corresponding wheel, is determined by means of wheel rotational-speed sensors, and **in that** the brake system is checked for a first and/or a second fault (Fi) as a function of this wheel-behaviour variable.

2. Method according to Claim 1, **characterized in that**, in the check for the first fault (F1), the wheel-behaviour variable used is a wheel-slip variable (lambdaij) which describes the wheel slip prevailing on the corresponding wheel, and/or **in that**, in the check for the second fault (F2), the wheel-behaviour variable used is a wheel-velocity variable (nij, vij) which describes the wheel rotational speed (nij) or the velocity (vij) of the corresponding wheel.

3. Method according to Claim 1, **characterized in that**, in the check for the first and/or the second fault, the predetermined vehicle states prevail when there is at least approximately a straight-ahead travel of the vehicle and a variable (vf) describing the vehicle velocity is approximately constant.

4. Method according to Claim 1, **characterized in that** the first valve arrangements consist in each case of a first valve (54, 56), in particular an inlet valve, and of a second valve (62, 64), in particular an outlet valve, the first and/or the second valves being activated by means of the predetermined activation signals (Aij*), and **in that**, in the check for the first fault, both all the first and all the second valves of the first valve arrangements are brought into a shut-off position by means of the predetermined activation signals.

5. Method according to Claim 1, **characterized in that** the first valve arrangements consist in each case of a first valve (54, 56), in particular an inlet valve, and of a second valve (62, 64), in particular an outlet valve, the first and/or the second valves being activated by means of the predetermined activation signals (Aij*), and **in that**, in the check for the second fault, by means of the predetermined activation signals, for a first valve arrangement, the first valve is brought into a passage position and the associated second valve into a shut-off position and, for the remaining first valve arrangements, the first valves are brought into a shut-off position and the associated second valves into a shut-off position or passage position, in particular the check for the second fault is carried out in such a way that the associated first valve is brought correspondingly into the passage position in each case for another wheel of the vehicle in succession.

6. Method according to Claim 4, **characterized in that**, during the corresponding activation of the first and the second valves, a wheel-behaviour variable is determined for each wheel, and **in that** the wheel-behaviour variables (lambdaij) are compared with a threshold value (S), and **in that**, in the event that at least one of the wheel-behaviour variables is higher than the threshold value, the activation of the pump and of the first and the second valves is discontinued, and **in that**, after a predetermined duration, the pump and the first and the second valves are activated once again by means of the predetermined activation signals, and **in that** the first fault is present when, during this further activation, at least one of the wheel-behaviour variables is once again higher than the threshold value.

7. Method according to Claim 5, **characterized in that**, during the corresponding activation of the first and the second valves, a wheel-behaviour variable is determined for each wheel, and **in that** the wheel-behaviour variable (n1, v1) of the wheel, the first valve of which is brought into the passage position, is compared with the wheel-behaviour variable (nij*, vij*) of at least one wheel, the first valve of which is brought into the shut-off position, and **in that** the second fault is present when the wheel-behaviour variable of the wheel, the first valve of which is brought into the passage position, does not differ to a predeterminable extent (S1, S2) from the wheel-behaviour variable of the at least one wheel, and/or **in that**, during the corresponding activation of the first and the second valves, a wheel-behaviour variable is determined for each wheel, and **in that** the change in the wheel-behaviour variable (d/dt(n1), d/dt(v1)) of the wheel, the first valve of which is brought into the passage position, is determined per unit time and is compared with a predetermined threshold value (S3, S4), and **in that** the second fault is present when this change is lower than the predetermined threshold value.

8. Method according to Claim 1, **characterized in that** the brake system has a reservoir (28) for the reception of brake medium and, on the input side, a first valve (48), in particular a changeover valve, and a second valve (82), in particular an intake valve, the reservoir being connected both to this first and to this second valve, and **in that**, during the actuation of the pump and the first valve arrangement, the first input-side valve is brought into a shut-off position (50) and the second input-side valve into a passage position.

9. Method according to Claim 1, **characterized in that** the pump used is a first pump (84), in particular a precharging pump, which is directly connected on the suction side to a reservoir and by means of which brake medium can be conveyed in the direction of the wheel-brake cylinders, and/or **in that** the pump used is a second pump (66), in particular a return pump, which is connected to the first valve arrangements and by means of which brake medium can be conveyed into the wheel-brake cylinders or out of these.

10. Device for checking a brake system (10) contained in a vehicle, the brake system containing at least one brake circuit (I, II), the brake circuit containing first valve arrangements (70, 72) on the output side, wheel-brake cylinders (16, 18) assigned to the brake circuit being connected to the first valve arrangements, and the brake system having at least one pump (66, 84), by means of which brake medium can be conveyed to at least two wheel-brake cylinders, **characterized in that** there are means (202) by which, in predetermined vehicle states, the at least one pump is actuated and the first valve arrangements are activated by means of predetermined activation signals, and **in that** there are means (203) by which, during the actuation of the pump and the first valve arrangements, for at least one wheel of the vehicle, a wheel-behaviour variable, which is the wheel slip and/or the wheel rotational speed and/or the velocity of the wheel and which describes the wheel-rotation behaviour of the corresponding wheel, is determined by means of wheel rotational-speed sensors, and by which the brake system is checked for a first and/or a second fault as a function of the wheel-behaviour variable determined.

## Revendications

1. Procédé de contrôle d'une installation de freinage (10) dans un véhicule, comportant au moins un circuit de freinage (I, II), selon lequel le circuit de freinage présente à sa sortie des premiers dispositifs de soupapes (70, 72), des cylindres de freins de roue (16, 18) associés au circuit de freinage sont raccordés aux premiers dispositifs de soupapes, avec au moins une pompe (66, 84) fournissant un liquide de frein à au moins deux cylindres de freins de roue,
**caractérisé en ce qu'**
on actionne l'au moins une pompe dans des états prédéterminés du véhicule et on commande les premiers dispositifs de soupapes avec des signaux de commande prédéterminés (Aij*), pendant l'actionnement de la pompe et des premiers dispositifs de soupapes, on détecte au moyen de détecteurs de la vitesse de rotation des roues pour au moins une roue du véhicule, une grandeur de comportement de roues (nij, vij, lambdaij), qui exprime le patinage de la roue et/ou la vitesse de rotation de la roue et/ou la vitesse de la roue, et qui décrit le comportement de rotation de la roue correspondante, et on contrôle l'installation de freinage par rapport à un premier et/ou un second défaut (Fi) en fonction de cette grandeur de comportement de roues.

2. Procédé selon la revendication 1,
**caractérisé en ce que**
lors du contrôle par rapport au premier défaut (F1), on utilise comme grandeur de comportement de roues une grandeur de patinage de roue (lambdaij), qui décrit le patinage existant à la roue correspondante, et/ou lors du contrôle par rapport au second défaut (F2), on utilise comme grandeur de comportement de roues une grandeur de vitesse de roue (nij, vij), qui décrit la vitesse de rotation de la roue (nij) ou la vitesse (vij) de la roue correspondante.

3. Procédé selon la revendication 1,
**caractérisé en ce que**
lors du contrôle par rapport au premier et/ou au second défaut, les situations prédéterminées du véhicule existent lorsque le véhicule quitte au moins approximativement la ligne droite et qu'une grandeur (vf) décrivant la vitesse du véhicule reste pratiquement constante.

4. Procédé selon la revendication 1,
**caractérisé en ce que**
les premiers dispositifs de soupapes se composent chaque fois d'une première soupape (54, 56), en particulier une soupape d'admission, et d'une deuxième soupape (62, 64), en particulier une soupape d'échappement, et les premières et/ou les deuxièmes soupapes sont commandées par les signaux de commande prédéterminés (Aij*), et lors du contrôle par rapport au premier défaut, aussi bien toutes les premières que toutes les deuxièmes soupapes des premiers dispositifs de soupapes sont mises en position de fermeture.

5. Procédé selon la revendication 1,
**caractérisé en ce que**
les premiers dispositifs de soupapes se composent chaque fois d'une première soupape (54, 56), en particulier une soupape d'admission, et d'une deuxième soupape (62, 64), en particulier une soupape d'échappement, et les premières et/ou les deuxièmes soupapes sont commandées par les signaux de commande prédéterminés (Aij*), et lors du contrôle par rapport au second défaut, pour un premier agencement de soupapes la première soupape est mise en position d'ouverture et la deuxième soupape associée est mise en position de fermeture, et pour les autres premiers dispositifs de soupape les premières soupapes sont mises en position de fermeture et les deuxièmes soupapes associées sont mises en position de fermeture ou en position d'ouverture, par les signaux de commande prédéterminés, et en particulier le contrôle par rapport au second défaut est effectué de telle façon que la première soupape associée soit mise en position d'ouverture de façon correspondante successivement pour chacune des roues du véhicule.

6. Procédé selon la revendication 4,
**caractérisé en ce qu'**
on détecte une grandeur de comportement des roues pour chaque roue pendant la commande correspondante de la première et de la deuxième soupape, on compare les grandeurs de comportement de roues (lambdaij) avec une valeur de seuil (S), au cas où au moins une des grandeurs de comportement de roues est plus grande que la valeur de seuil, on interrompt la commande de la pompe et de la première et de la deuxième soupape, après un temps prédéterminé, on commande de nouveau la pompe, la première et la deuxième soupape avec les signaux de commande prédéterminés, et **en ce que** le premier défaut est présent lorsqu'au moins une des grandeurs de comportement de roues est de nouveau plus grande que la valeur de seuil en présence de cette commande renouvelée.

7. Procédé selon la revendication 5,
**caractérisé en ce que**
l'on détecte une grandeur de comportement des roues pour chaque roue pendant la commande correspondante des première et deuxième soupapes, on compare la grandeur de comportement de roues (n1, v1) de la roue dont la première soupape est mise en position d'ouverture, avec la grandeur de comportement de roues (nij*, vij*) d'au moins une roue dont la première soupape est mise en position de fermeture, le second défaut est présent lorsque la grandeur de comportement des roues de la roue dont la première soupape est mise en position d'ouverture ne diffère pas dans une mesure prévisible (S1, S2) de la grandeur de comportement des roues de cette au moins une roue, et/ou on détecte une grandeur de comportement de roues pour chaque roue pendant la commande correspondante des première et deuxième soupapes, on détecte la variation par unité de temps de la grandeur de comportement de roues [(d/dt(n1), d/dt(v1)] de la roue dont la première soupape est mise en position d'ouverture, on la compare avec une valeur de seuil prédéterminée (S3, S4), et le second défaut est présent lorsque cette variation est plus petite que la valeur de seuil prédéterminée.

8. Procédé selon la revendication 1,
**caractérisé en ce que**
l'installation de freinage comprend un réservoir de stockage (28) destiné à recevoir un liquide de frein et présente à l'entrée une première soupape (48), en particulier une soupape d'inversion, et une deuxième soupape (82), en particulier une soupape d'aspiration, et le réservoir de stockage est raccordé aussi bien à cette première qu'à cette deuxième soupape, et pendant l'actionnement de la pompe et du premier agencement de soupapes, la première soupape d'entrée est mise en position de fermeture (50) et la deuxième soupape d'entrée est mise en position d'ouverture.

9. Procédé selon la revendication 1,
**caractérisé en ce qu'**
on utilise comme pompe une première pompe (84), en particulier une pompe de préchargement, qui est en communication directe à sa sortie avec le réservoir de stockage et qui fournit un liquide de frein en direction des cylindres de freins de roue, et/ou on utilise comme pompe une deuxième pompe (66), en particulier une pompe de refoulement qui est en communication avec les premiers dispositifs de soupapes, et qui fournit un liquide de frein pouvant être envoyé aux cylindres de freins de roue ou refoulé à partir de ceux-ci.

10. Dispositif de contrôle d'une installation de freinage (10) dans un véhicule, comportant au moins un circuit de freinage (I, II), dans lequel le circuit de freinage présente à sa sortie des premiers dispositifs de soupapes (70, 72), des cylindres de freins de roue (16, 18) associés au circuit de freinage sont raccordés aux premiers dispositifs de soupapes, et l'installation de freinage comprend au moins une pompe (66, 84) qui fournit un liquide de frein à au moins deux cylindres de freins de roue,
**caractérisé par**
des moyens (202) avec lesquels on actionne l'au moins une pompe et on commande les premiers dispositifs de soupapes avec des signaux de commande prédéterminés dans des états prédéterminés du véhicule, des moyens (203) avec lesquels, pendant l'actionnement de la pompe et des premiers dispositifs de soupapes, on détecte au moyen de détecteurs de vitesse de rotation de roues pour au moins une roue du véhicule une grandeur de comportement de roues, qui peut être le patinage de la roue et/ou la vitesse de rotation de la roue et/ou la vitesse de la roue, et qui décrit le comportement de rotation de la roue correspondante, et avec lesquels on contrôle l'installation de freinage par rapport à un premier et/ou un second défaut en fonction de la grandeur de comportement des roues détectée.
